# EUROPEAN PATENT APPLICATION

(11) **EP 1 953 720 A1**
(43) Date of publication of application: **06.08.2008**
(21) Application number: 08003608.0
(22) Date of filing: 05.02.2008
(51) Int. Cl.: G08B 25/00, G08B 25/10

(54) **Method and system for evaluating the quality of a radio connection between two wireless devices**

(30) Priority: 05.02.2007 IT TO20070082
(71) Applicant: Elkron S.p.A., 10092 Beinasco (TO) (IT)
(72) Inventor: Chinello, Adriano, 28041 Arona (NO) (IT); Palermo, Francesco, 10094 Giaveno (TO) (IT)
(74) Representative: Dini, Roberto

(57) **Abstract**

The invention relates to a method and system for evaluating the quality of a radio connection between a first device (3;1) and a second device (1;3). both being of the wireless type. said method comprising steps wherein a signal is sent hy the first device (3; 1) to the second device (1:3) and the strength of the received signal (RSSI) is measured by the second device (1:3).

The method according to the invention is characterized in that information is obtained about the radio strength margin of the second device (1:3), wherein the radio strength margin is defined as the difference between the strength of the signal (RSSI) received by said second device (1;3) and a working threshold

## Description

The present invention relates in general to wireless communication systems.

More specifically, the present invention relates to a system for evaluating the quality of a radio connection between two wireless devices.

The wireless technology has now been used for many years for various applications.

The wireless technology is extremely useful especially in the access control field, because it allows to locate peripheral devices, e.g. sensors, at relatively long distances from a central unit. This turns out to be particularly effective in anti-intrusion and fire prevention systems.

It is a need particularly felt by a user, in particular an installer, of a wireless system to be able to evaluate the quality of the radio connection between the central unit and the peripheral devices, and vice versa.

In fact, the user may want to know if the central unit and all the peripheral devices of the system are communicating properly; in addition, the installer may also want to know if the central unit can "see" all of the peripheral devices, since any physical obstacles, such as walls, ceilings or slabs, or radioelectric obstacles, such as electromagnetic fields generated by various electric devices, might prevent the system from operating correctly. It follows that the availability of information about the quality of the radio connection allows the installer to change the position of one or more peripheral devices in order to achieve the optimal quality of the radio connection between said devices and the central unit.

Systems are known in the art wherein a test is carried out for the purpose of establishing the quality of the radio strength of the received signal, or RSSI ("Received Signal Strength Indication"). For example, patent US 4,603,325 discloses a system which comprises a base unit provided with a received signal strength measuring unit and a plurality of remote sensors. When in a test mode, the base unit receives a signal from the sensors and then evaluates the quality of the radio connection based on predetermined parameters.

However, a radio connection evaluation test of this kind has several drawbacks because:
- it may provide unstable results for the same device even when multiple tests are carried out within a very short time interval;
- it may display unstable results during a test, due to instantaneous variations in the quality of the radio connection, e.g. caused by the sudden onset of an electromagnetic field generated by an electric device just turned on.

Furthermore, with "statistics-based" systems such as the one described in patent US 4,603,325, which measure the presence or absence of the radio connection for a predetermined number of times over a predetermined time window, the test does not provide any reliable indication about the quality of the radio connection.

It is therefore an object of the present invention to overcome the above-mentioned drawbacks by providing a method and a system for evaluating the quality of a radio connection between two wireless devices, wherein the information about the quality of the radio connection provided to the user/installer is both reliable and accurate.

It is a further object of the present invention to provide a method and a system for evaluating the quality of a radio connection between two wireless devices which can be easily understood by an inexperienced user or by an installer.

It is a further object of the present invention to provide a method and a system for evaluating the quality of a radio connection between two wireless devices which can provide stable results.

These and other objects of the invention are achieved by the method and the system as claimed in the appended claims, which are intended as an integral part of the present description.

According to the present invention, a method and a system for evaluating the quality of a radio connection between two wireless devices are described wherein the central unit/peripheral device can calculate a radio strength margin defined as the difference between the received signal RSSI and a working threshold of the central unit/peripheral device.

The working threshold may vary between the background noise level of the central unit/peripheral device and the background noise level of the central unit/peripheral device plus a predetermined value, or offset.

The quality of the radio connection between the central unit and the peripheral device is based on the information provided by the radio strength margin.

In turn, the radio strength margin is based on a local measurement carried out by the central unit/peripheral device, and as such it provides a precise and accurate parameter for evaluating the quality of the radio connection.

The above objects will become apparent from the detailed description of the method and system according to the invention, with particular reference to the annexed figures, wherein:
- Fig. 1 is a diagram of a first embodiment of a system for evaluating the quality of the radio connection between two wireless devices according to the invention;
- Fig. 2 is a diagram of a second embodiment of a system for evaluating the quality of the radio connection between two wireless devices according to the invention;
- Fig. 3 is a table wherein a value measured by one of the devices of Fig. 1 or 2 is matched to discrete information associated therewith;
- Fig. 4 is a general diagram of a system implementing the two embodiments of Fig. 1 and/or Fig. 2.

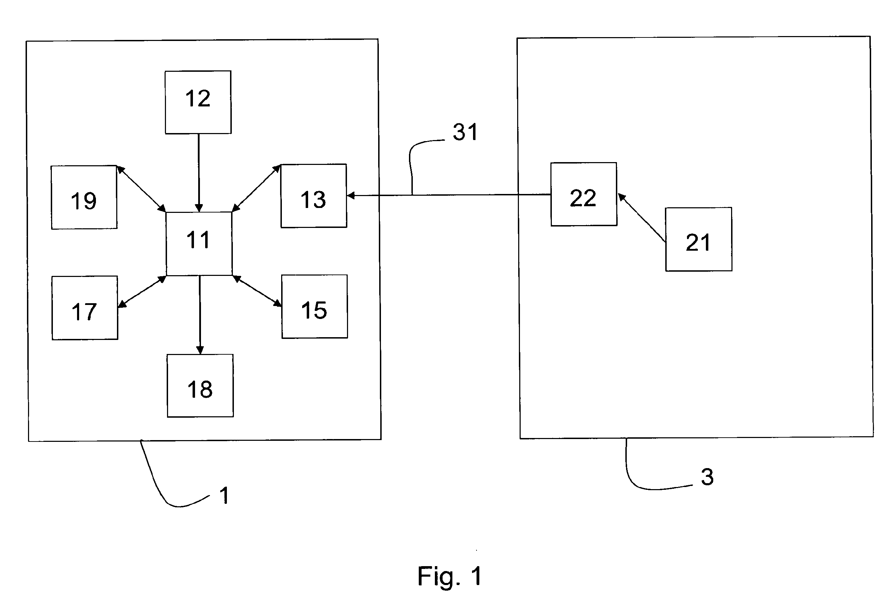

Referring now to Fig. 1, it shows a diagram of a first embodiment of a system for verifying the quality of the radio connection between a first device 1 and a second device 3, both being of the wireless type.

The first device 1 comprises a microprocessor 11, a module 13 adapted to receive radio signals, a memory 15, a module 17 adapted to measure the background noise of the first device 1, a calculation module 19, display means 18, and a module 12 for measuring the strength of a received radio signal, also known as RSSI ("Received Signal Strength Indication").

Modules 12,13,17 and 19, as well as memory 15, are either built in microprocessor 11 or physically arranged outside of it; in any case, microprocessor 11 can control and manage them, just like it controls and manages display means 18.

The second device 3 comprises a transmission module 22 for sending a radio signal to reception module 13 of the first device 1.

Transmission module 22 is controlled and managed by a microprocessor 21.

In order to evaluate the quality of the radio connection between the second device 3 and the first device 1, the following procedure is carried out.

Through transmission module 22, the second device 3 sends a radio signal 31 which is received by reception module 13 of the first device 1.

The strength of the received radio signal RSSI is analyzed by module 12 of the first device 1 and stored in a first memory cell of memory 15.

The background noise level LRF of the first device 1, measured by specific module 17, is stored in a second memory cell of memory 15.

The background noise level LRF of the first device 1 is preferably measured as the first device 1 is being turned on or initialized, and in any case in the absence of any radio signal coming from the second device 3.

If the evaluation of the quality of the radio connection between the second device 3 and the first device 1 is to be carried out within a specific "test" mode, the background noise level LRF is measured before starting the "test" mode.

In order to take into account the environmental and installation conditions of the first device 1, the background noise level LRF may be measured periodically at predefined time intervals, so that it can be re-defined over time.

Calculation module 19 takes from memory 15 the values stored in the first and second cells of memory 15 and calculates the difference between the strength of the received signal RSSI and the background noise level LRF, thereby obtaining the radio strength margin of the first device 1.

Aiming at ensuring a more reliable quality of the radio connection between the second device 3 and the first device 1, a predefined value, or offset, may be added to the background noise level LRF so that it is at least equal to the value of the minimum reception power required by the first device 1 in order to be able to demodulate the signal received from the second device 3.

In other words, the radio strength margin is calculated as the difference between the strength of the radio signal RSSI received by the first device 1 and a working threshold which may have one of two possible values: in a first variant, the working threshold is the background noise LRF of the first device 1; in a second variant, the working threshold is at least equal to the value of the minimum reception power required by the first device 1 in order to be able to demodulate the received signal.

The radio strength margin thus calculated provides quantitative information about the quality of the radio connection between the first device 1 and the second device 3.

This quantitative information is then transformed into qualitative information, which is displayed on display means 18 of the first device 1, e.g. a liquid crystal display LCD.

The procedure for transforming said quantitative information into qualitative information is as described below.

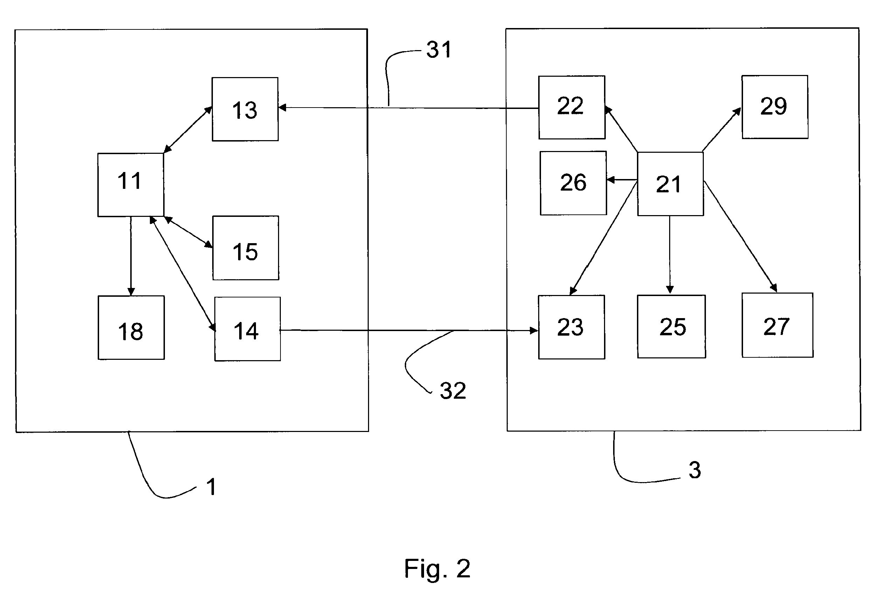

Referring now to Fig. 2, it shows a diagram of a second embodiment of a system and a method for evaluating the quality of the radio connection between a first device 1 and a second device 3, both being of the wireless type.

In this second embodiment, the first device 1 comprises a microprocessor 11, a module 13 adapted to receive radio signals, a module 14 adapted to transmit radio signals, a memory 15, and display means 18.

Modules 13 and 14, as well as memory 15, are either built in microprocessor 11 or physically arranged outside of it; in any case, microprocessor 11 can control and manage them, just like it controls and manages display means 18.

The second device 3 comprises a microprocessor 21, a module 22 adapted to transmit radio signals, a module 23 adapted to receive radio signals, a module 25 for measuring the strength of a received radio signal, or RSSI, a module 26 for measuring the background noise level, a memory 27, and a calculation module 29.

Modules 22, 23, 25, 26 and 29, as well as memory 27, are either built in microprocessor 21 or physically arranged outside of it; in any case, he microprocessor 21 can control and manage them.

In order to evaluate the quality of the radio connection between the first device 1 and the second device 3, the following procedure is carried out.

Through transmission module 14, the first device 1 sends a radio signal 32 which is received by the reception module 23 of the second device 3.

The strength of the received radio signal RSSI is analyzed by module 25 of the second device 3 and is stored in a first memory cell of memory 27.

The background noise level LRF of the second device 3, measured by module 26, is stored in a second memory cell of memory 27.

The background noise level LRF of the second device 3 is preferably measured as the second device 3 is being turned on or initialized, and in any case in the absence of any signal coming from the first device 1.

If the evaluation of the quality of the radio connection between the first device 1 and the second device 3 is to be carried out within a specific "test" mode, the background noise level LRF is measured before starting the "test" mode.

In order to take into account the environmental and installation conditions of the second device 3, the background noise level LRF may be measured periodically at predefined time intervals, so that it can be re-defined over time.

Calculation module 29 takes from memory 27 the values previously stored in the first and second memory cells of memory 27 and calculates the difference between the strength of the received signal RSSI and the background noise level LRF, thereby obtaining the radio strength margin of the second device 3.

Aiming at ensuring a more reliable quality of the radio connection between the first device 1 and the second device 3, a predefined value, or offset, may be added to the background noise level LRF so that it is at least equal to the value of the minimum reception power required by the second device 3 in order to demodulate signal 32 received from the first device 1.

In other words, the radio strength margin is calculated as the difference between the strength of the radio signal RSSI received by the second device 3 and a working threshold which may have one of two possible values: in a first variant, the working threshold is the background noise LRF of the second device 3; in a second variant, the working threshold is at least equal to the value of the minimum reception power required by the second device 3 in order to be able to demodulate signal 32 received from the first device 1.

The radio strength margin thus calculated provides quantitative information about the quality of the radio connection between the first device 1 and the second device 3.

Said information is sent in digital format by transmission module 22 of the second device 3 to reception module 13 of the first device 1 through a radio communication protocol, and is then supplied to microprocessor 11.

This quantitative information is then transformed into qualitative information, which is displayed on display means 18 of the first device 1, e.g. a liquid crystal display LCD.

The procedure for transforming quantitative information into qualitative information will now be described, which is common to both the first and the second embodiments shown in Fig. 1 and Fig. 2, respectively.

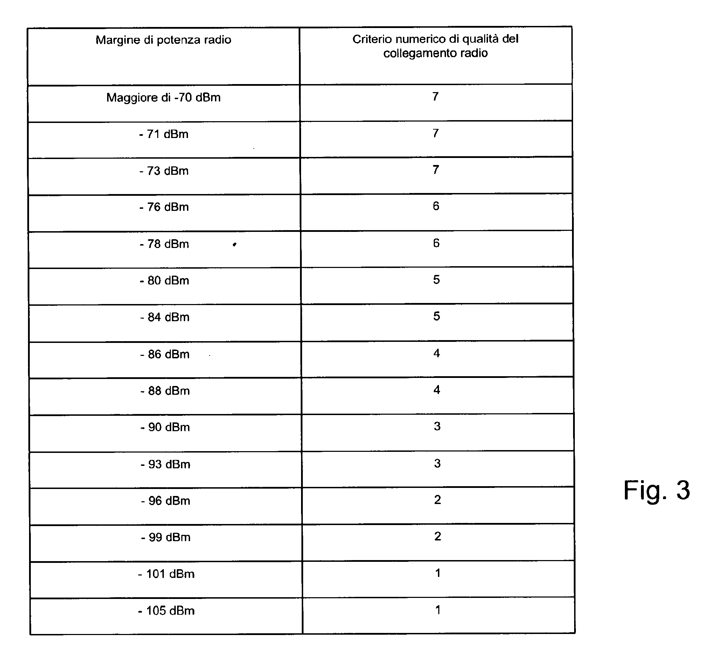

Memory 15 of the first device 1 stores a set of matches in table form, as shown in Fig. 3.

The first column of the table of Fig. 3 contains a value expressed in dBm, which represents the radio strength margin calculated by calculation module 19 or 29; the second column contains a numerical criterion of radio connection quality, expressed in numerical form and variable between 1 to 7, wherein a higher number indicates a higher radio strength margin, and therefore a higher quality of the radio connection between the first device 1 and the second device 3, or vice versa.

The table of Fig. 3 has been filled in by assuming a threshold value of -102 dBm when device 1 or 3 is initialized, depending on whether the calculated threshold value relates to the first device 1 or to the second device 3, respectively.

By way of example, a radio strength margin of -88 dBm corresponds to a numerical criterion of radio connection quality "4", while a radio strength margin at least equal to -73 dBm corresponds to a numerical criterion of radio connection quality "7".

The numerical quality criteria may also be associated with text strings which can be displayed by display means 18. For instance, a numerical quality criterion "7" will indicate that the quality of the radio connection is very good; a numerical quality criterion "5" or "6" will indicate that the quality of the radio connection is good; a numerical quality criterion "4" will indicate that the quality of the radio connection is sufficient; a numerical quality criterion lower than "3" will indicate that the quality of the radio connection is insufficient; if the reception signal is not received, a "no signal" message will be displayed. Generally, the test is repeated for a predetermined number of times, and the results obtained about the radio strength margin are then averaged in order to obtain a mean radio strength margin value. The quality of the radio connection is then evaluated on the basis of said mean value and of the table of Fig. 3. For example, seven test procedures can be carried out within a two-second time window.

It is also possible to provide that, if no signal is received at least three times out of seven, a "no signal" indication will be displayed regardless of the radio strength margin values obtained in the remaining four test procedures.

The numerical quality criteria in the second column of Fig. 3 may be displayed by display means 18 through a series of symbols, e.g. dots or slashes, in a number being proportional or equal to the numerical value of the numerical quality criterion.

It is apparent that the values shown in the first column of the table of Fig. 3 are only provided by way of example, and that other types of values and numerical quality criteria may be defined by those skilled in the art.

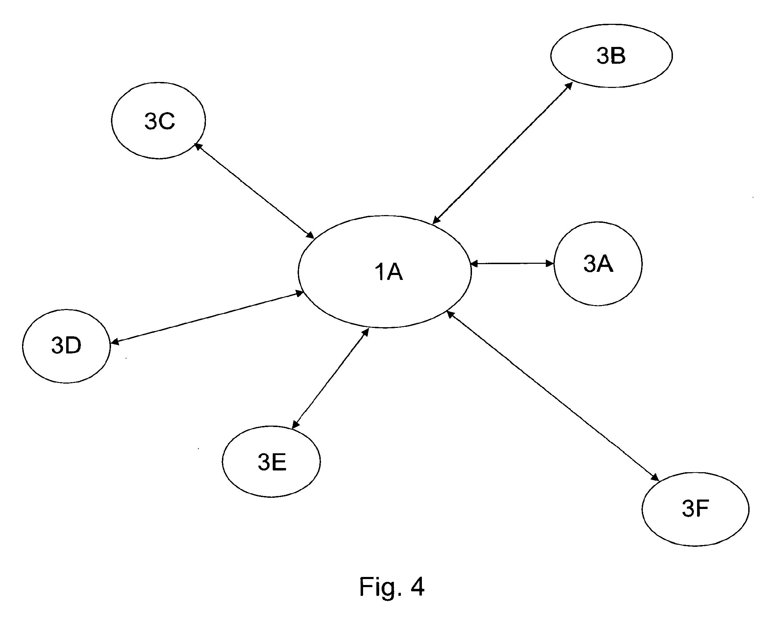

Referring now to Fig. 4, it shows an example of implementation of the first and second embodiments of the system as shown in Fig. 1 and 2, respectively.

Fig. 4 illustrates a typical setup of a wireless anti-intrusion system which comprises a central unit 1A and a series of peripheral devices 3A-3F.

Central unit 1A, or concentrator, is configured in the same way as the first device 1 of Figs. 1 and 2, whereas each peripheral device 3A-3F is configured like the second device 3 of Figs. 1 and 2.

Peripheral devices 3A-3F are preferably sensors, control elements or actuation elements.

Some examples of sensors are optical and/or thermal smoke sensors, infrared and/or microwave motion sensors, door or window sensors; some examples of control elements are LED or display type alphanumerical keyboards and remote push-buttons, which can be used for programming or controlling various devices remotely; some examples of actuation elements are optical-acoustic signalling devices, such as sirens and signs, as well as electric relay actuators.

The quality of the radio connection between central unit 1A and peripheral devices 3A-3F can be evaluated by using both the first embodiment of Fig. 1 and the second embodiment of Fig. 2.

The first embodiment of Fig. 1 may be applied to the anti-intrusion system of Fig. 4 for verifying the quality of the section from one of peripheral devices 3A-3F to central unit 1A. This type of verification is applicable to unidirectional systems, i.e. with transmitting peripheral devices 3A-3F and a receiving central unit 1A, as well as to bidirectional systems.

The second embodiment of Fig. 2 may be applied to the anti-intrusion system of Fig. 4 for verifying the quality of the section from central unit 1A to one of peripheral devices 3A-3F, and is useful for bidirectional systems only.

In order to maximize the radio range of the system without at the same time defining a working threshold being too close to the noise level, which would result in a deterioration of the communication error rate, which can be expressed as BER or "Bit Error Rate", in both central unit 1A and peripheral devices 3A-3F the system adopts a dynamic algorithm for handling the working threshold, which is defined and adapted over time according to the noise actually detected by central unit 1A in the embodiment of Fig. 1 or by every single device 3A-3F in the embodiment of Fig. 2.

Within the context of a bidirectional system, the integration of the embodiment of Fig. 1 with the embodiment of Fig. 2 provides an extremely effective method for evaluating the quality of the radio connection, even more so when dynamic working thresholds are used.

This is due to the fact that the accurate strength margin information detected by peripheral devices 3A-3F, which is based on respective working thresholds and therefore on the specific environmental/installation conditions of peripheral devices 3A-3F themselves, is the most critical information for a successful overall radio communication of the system.

The features of the present invention, as well as its advantages, are apparent from the above description.

The system and the method according to the invention advantageously allow to obtain a true indication about the quality of the level of the radio signal between the central unit and any wireless peripheral device of a system, and vice versa.

Furthermore, it is advantageously possible to identify any peripheral devices having insufficient radio coverage, so that a user can report the malfunction and an installer can find a more suitable installation place.

Thanks to the particular method according to the invention, the results made available to the user/installer are not unstable at all; on the contrary, they are perfectly stable and accurate because they are based on local measurements taken by the peripheral device or the central unit.

An additional advantage provided by the method and system according to the present invention is offered by the use of a dynamic working threshold, which can be adapted over time to the local conditions of the device.

Also, by associating the working threshold with the background noise level which can be measured by the device, it is also possible to take automatically into account any possible thermal drifts or process tolerances of the components of the peripheral device or central unit, since the latter inevitably affect the background noise level.

The method and system for verifying the quality of a radio connection between two wireless devices described herein by way of example may be subject to many possible variations without departing from the novelty spirit of the inventive idea; it is also clear that in the practical realization of the invention the illustrated details may have different shapes or be replaced with other technically equivalent elements.

For example, a possible application of the system is an anti-intrusion system; it may however also be used as afire prevention system or for other purposes, depending on the type of sensors, control elements or actuation elements employed.

It can therefore be easily understood that the present invention is not limited to the above-described method and system, but may be subject to many modifications, improvements or replacements of equivalent parts and elements without departing from the novelty spirit of the inventive idea, as clearly specified in the following claims.

## Claims

1. Method for evaluating the quality of a radio connection between a first device (3;1) and a second device (1;3), both being of the wireless type, said method comprising the following steps:
- transmitting a signal (31;32) from said first device (3;1) to said second device (1;3);
- measuring the strength of the received signal (RSSI) by said second device (1;3),
said method being **characterized in that** information is obtained about the radio strength margin of said second device (1;3), said radio strength margin being defined as the difference between the strength of the signal (RSSI) received by said second device (1;3) and a working threshold.

2. Method according to claim 1, **characterized in that** said working threshold is a background noise level (LRF) of said second device (1;3).

3. Method according to claim 1, **characterized in that** said working threshold is at least equal to the value of the minimum reception power required by said second device (1;3) in order to demodulate said received signal.

4. Method according to any of the preceding claims, **characterized in that** said working threshold is measured within a test mode for evaluating the quality of the radio connection.

5. Method according to one of the preceding claims, **characterized in that** said working threshold is measured by said second device (1;3) as said second device (1;3) is being turned on or initialized.

6. Method according to one of claims 1 to 4, **characterized in that** said working threshold is measured by said second device (1;3) on a periodical basis.

7. Method according to one of the preceding claims, **characterized by** comprising the additional step of displaying said information on display means (18) associated with said first device (1).

8. Method according to one of claims 1 to 6, **characterized in that** said information is sent by said second device (3) to said first device (1).

9. Method according to claim 8, **characterized by** comprising the additional step of displaying said information on display means associated with said first device (1).

10. Method according to one of claim 7 or 9, **characterized in that** said information is displayed graphically by said first or second display means (18) through a visual indication which is proportional to said radio strength margin.

11. Method according to claim 10, **characterized in that** said visual indication is proportional to a mean value of a plurality of radio strength margin values measured by said first (1) or second (3) device within a predetermined time interval.

12. System for evaluating the quality of a radio connection between a first device (3,1) and a second device (1;3), both being of the wireless type, wherein:
- said first device (3;1) comprises transmission means (22;14) for sending a signal (31;32) to said second device (1;3);
- said second device (1;3) comprises reception means (13;23) for receiving said signal and measuring means (12;25) for measuring the strength of the received signal (RSSI),
**characterized in that** said second device (1;3) comprises calculation means (19;29) for obtaining information about the radio strength margin of said second device (1;3), wherein said radio strength margin is defined as the difference between the strength of the signal (RSSI) received by said second device (1;3) and a working threshold.

13. System according to claim 12, **characterized in that** said working threshold is a background noise level (LRF) of said second device (1;3), said background noise level (LRF) being measured by measuring means (17;26).

14. System according to claim 12, **characterized in that** said working threshold is at least equal to the value of the minimum reception power required by said second device (1;3) in order to demodulate said received signal (RSSI).

15. System according to one of claims 12 to 14, **characterized in that** said second device (1;3) comprises a memory (15) for storing the value of said working threshold.

16. System according to claim 13, **characterized in that** said measuring means (17;26) measure said background noise level for a predetermined number of times within a predetermined time interval.

17. System according to one of claims 12 to 14, **characterized in that** said second device (1;3) measures said working threshold as said second device (1;3) is being turned on or initialized.

18. System according to one of claims 12 to 14, **characterized in that** said second device (1;3) measures said working threshold on a periodical basis.

19. System according to any of the preceding claims, **characterized in that** said first device
(1) is associated with display means (18) for displaying said information on said display means (18).

20. System according to one of claims 12 to 18, **characterized in that** said second device (3) comprises transmission means (22) for sending said information to said first device (1), and said first device (1) comprises reception means (13) for receiving said information.

21. System according to claim 20, **characterized in that** said first device (1) is associated with display means (18) for displaying said information on said display means (18).

22. System according to one of claims 19 or 21, **characterized in that** said display means (18) display said information graphically, said display means (18) providing a visual indication which is proportional to said radio strength margin.

23. System according to claim 22, **characterized in that** said visual indication is proportional to a mean value of a plurality of radio strength margin values measured by said first (1) or second (3) device within a predetermined time interval.

24. System according to claim 22 or 23, **characterized in that** said visual indication is associated with a numerical criterion of radio connection quality, said numerical criterion being stored in said memory (15).

25. System according to one of claims 12 to 24, **characterized in that** said second device (1;3) comprises at least one sensor, in particular a smoke, motion or entry sensor.

26. System according to one of claims 12 to 24, **characterized in that** said second device (1;3) comprises at least one control element, in particular a keyboard or a remote pushbutton.

27. System according to one of claims 12 to 24, **characterized in that** said second device (1;3) comprises at least one actuation element, in particular an optical-acoustic signalling device (siren, sign) or an electric relay actuator.

28. System, in particular an anti-intrusion system, according to any of claims 25 to 27, comprising at least one or more of the following elements: said at least one sensor, said at least one control element, and said at least one actuation element.

29. Method and system according to the innovative teachings of the present description and of the annexed drawings, which show preferred and advantageous embodiments of said method and system.
